Europäisches Patentamt

European Patent Office

Office européen des brevets

(19)

(11) Veröffentlichungsnummer: **0 075 967**
**B1**

(12) **EUROPÄISCHE PATENTSCHRIFT**

(45) Veröffentlichungstag der Patentschrift:
13.11.85

(51) Int. Cl.⁴: **H 02 B 1/24**

(21) Anmeldenummer: **82200874.4**

(22) Anmeldetag: **12.07.82**

(54) Schaltanlage.

(30) Priorität: **30.09.81 CH 6295/81**

(43) Veröffentlichungstag der Anmeldung:
**06.04.83 Patentblatt 83/14**

(45) Bekanntmachung des Hinweises auf die Patenterteilung:
**13.11.85 Patentblatt 85/46**

(84) Benannte Vertragsstaaten:
**CH DE FR IT LI SE**

(56) Entgegenhaltungen:
**DE - C - 723 617**
**US - A - 4 247 787**

(73) Patentinhaber: **BBC Aktiengesellschaft Brown, Boveri & Cie., Haselstrasse, CH-5401 Baden (CH)**

(72) Erfinder: **Köppl, Georg, Waldmatt 14, CH-5242 Birr (CH)**

BUNDESDRUCKEREI BERLIN

## Beschreibung

Die Erfindung betrifft eine Schaltanlage gemäß dem ersten Teil der Patentansprüche 1 und 3.

Derartige Schaltanlagen sind aus der US-A-4 247 787 bekannt. Bei diesen Anlagen sind vier Knotenpunkte vorgesehen, von denen jeder über einen unterbrechbaren Stromzweig mit jedem der verbleibenden drei Knotenpunkte verbunden ist. Die hierfür benötigten sechs unterbrechbaren Stromzweige verbinden die vier Knotenpunkte in vier jeweils drei Knotenpunkte aufweisenden Teilringen, wobei jeweils zwei Teilringe zwei Knotenpunkte gemeinsam haben. Da jeder Knotenpunkt über drei verschiedene Stromzweige mit drei verschiedenen Knotenpunkten verbindbar bzw. von diesen isolierbar ist, verbleiben bei Ausfall einer in einem der Stromzweige vorgesehenen Schaltstelle noch zwei weitere intakte Stromzweige, durch die die Verbindung des vom Ausfallen der Schaltstelle betroffenen Knotenpunktes mit den übrigen Knotenpunkten sichergestellt ist. Fällt nun noch eine weitere der in den beiden genannten Stromzweigen vorgesehenen Schaltstelle aus, so ist die Versorgung des betroffenen Knotenpunktes wegen der Funktionssicherheit der dritten Schaltstelle gewährleistet. Solche Anlagen sind jedoch nur mit verhältnismäßig großem Aufwand oder unter erheblichem Verlust an Redundanz erweiterbar und führen in dieser Form zu komplexen und wenig übersichtlichen Anlagestrukturen.

Aus der DE-C-723 617 ist ferner eine Hochspannungs-Freiluftschaltanlage mit zwei Sammelschienensystemen bekannt, welche einen polygonartigen Ring bilden, an dessen Umfang Abzweige angeschlossen sind. Zwischen bestimmten der Abzweige des Ringes können Kupplungs- und Trennstellen eingeschaltet werden. Jeder Abzweig kann über Leistungs- und Trennschalter wahlweise an eines der beiden Sammelschienensysteme gelegt werden. Hierdurch ist es möglich, die Schaltanlage selbst dann zu betreiben, wenn eines der Sammelschienensysteme aus irgendeinem Grunde unterbrochen ist. Ist bei dieser Schaltanlage das die Abzweige verbindende Sammelschienensystem nicht verfügbar, so ist es erforderlich, alle Abzweige mittels der Leistungs- und Trennschalter von diesem System abzutrennen und nachfolgend auf das andere Sammelschienensystem zu schalten. Derartige Schaltungen sind jedoch aufwendig.

Es ist daher Aufgabe der Erfindung, Schaltanlagen der gattungsgemäßen Art derart weiterzubilden, daß deren Redundanz bei Erweiterung mit geringem apparativem Aufwand bei gleichzeitig kleinem Platzbedarf verbessert und gleichzeitig ein einfacher und übersichtlicher Anlagenaufbau ermöglicht wird.

Diese Aufgabe wird durch die im Kennzeichen der Ansprüche 1 und 3 angegebenen Merkmale gelöst.

Die erfindungsgemäßen Schaltanlagen gemäß den Ansprüchen 1 und 3 zeichnen sich durch große Übersichtlichkeit und eine besonders einfache und mit geringen apparativen Mitteln durchführbare Erweiterbarkeit unter gleichzeitiger Beibehaltung hoher Redundanz aus.

Ausgestaltungen der Erfindung sind Gegenstände der abhängigen Ansprüche.

Nachfolgend sind Ausführungsbeispiele der Erfindung anhand der Zeichnung in vereinfachter Form dargestellt.

Hierbei zeigt

Fig. 1 ein Schaltschema einer erfindungsgemäßen Schaltanlage, bei der ringförmig geschaltete Knotenpunkte über sternförmig angeordnete Stromzweige verbindbar sind,

Fig. 2 ein Schaltschema einer erfindungsgemäßen Schaltanlage, bei der ringförmig geschaltete Knotenpunkte über kreuzförmig angeordnete Stromzweige verbindbar sind,

Fig. 3 ein Schaltschema einer weiteren erfindungsgemäßen Schaltanlage,

Fig. 4 eine Aufsicht auf die räumliche Anordnung der Knotenpunkte und Stromzweige der Schaltanlage gemäß Fig. 1,

Fig. 5 eine Aufsicht auf die räumliche Anordnung der Knotenpunkte und Stromzweige der Schaltanlage gemäß Fig. 2,

Fig. 6 eine Aufsicht auf die räumliche Anordnung der Knotenpunkte und Stromzweige der Schaltanlage gemäß Fig. 3,

Fig. 7 eine perspektivische Darstellung der Schaltanlage gemäß Fig. 5, bei der die konstruktiven Einzelheiten der abgebildeten Knotenpunkte und Stromzweige dargestellt sind, und

Fig. 8 eine Schaltanlage gemäß Fig. 5, an deren Ende zusätzlich jeweils zwei weitere Knotenpunkte installiert sind.

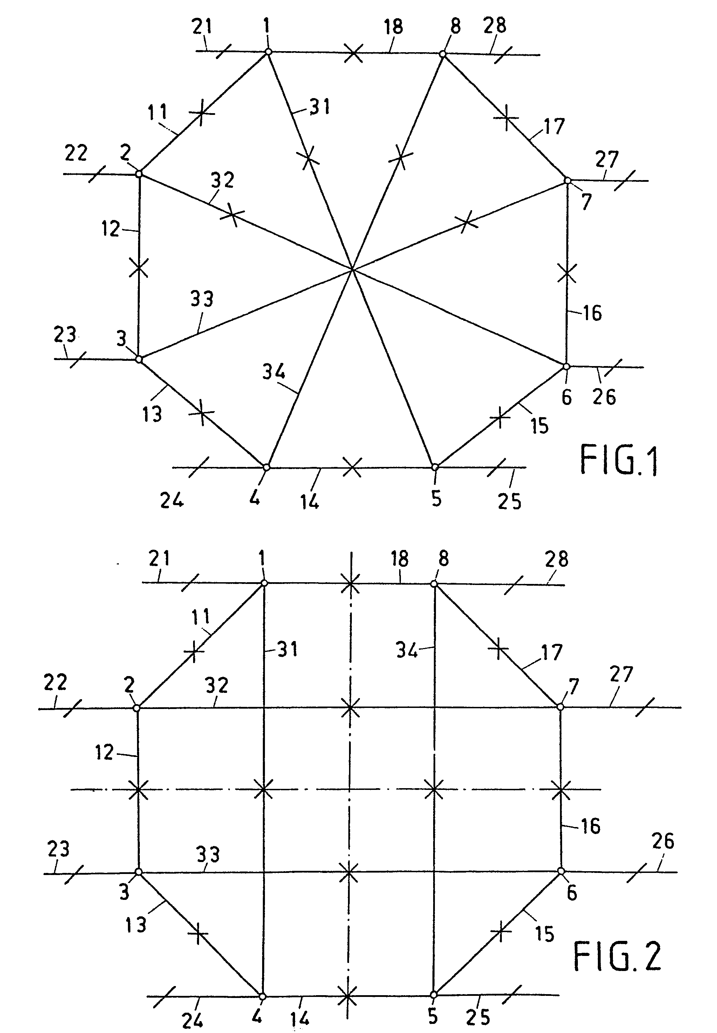

In allen Figuren sind gleiche Teile mit gleichen Bezugszeichen versehen. Das in Fig. 1 dargestellte Schaltschema einer ersten Ausführungsform der erfindungsgemäßen Schaltanlage weist Knotenpunkte 1 bis 8 auf. Diese Knotenpunkte sind ringförmig geschaltet und längs des Ringumfanges aufeinanderfolgend numeriert. Jeder der Knotenpunkte 1 bis 8 grenzt an zwei benachbarte Knotenpunkte, mit denen er mittels zweier der Stromzweige 11 bis 18 verbunden ist, an.

In jedem der Stromzweige 11 bis 18 ist eine durch ein Kreuz gekennzeichnete Schaltstelle vorgesehen. Jede Schaltstelle kann aus einer Serienschaltung eines ersten Trennschalters mit einem Leistungsschalter, einem Stromwandler und einem zweiten Trennschalter bestehen. An den Knotenpunkten 1 bis 8 sind Stromabgänge und -einspeisungen 21 bis 28 vorgesehen. In jedem Stromabgang bzw. in jeder Stromeinspeisung ist ein lediglich symbolisch durch einen Querstrich bezeichneter Trennschalter sowie gegebenenfalls ein Überspannungsableiter und ein Erdungsschalter vorgesehen.

Die Knotenpunkte 1 bis 8 sind darüber hinaus aber auch über Stromzweige 31 bis 34 verbindbar. Diese Stromzweige weisen durch ein Kreuz gekennzeichnete Schaltstellen auf, welche analog den in den Stromzweigen 11 bis 18 der ringförmig geschalteten Knotenpunkte vorgesehenen Schaltstellen aufgebaut sein können. Die Stromzweige 31 bis 34 verbinden bei Betätigung der zugeordneten Schaltstellen jeweils zwei sich hinsichtlich des Mittelpunktes des Ringes schaltungsmäßig gegenüberliegende Knotenpunkte, sind also sternförmig angeordnet. Hierbei sind die Knotenpunkte zu einem ersten, etwa die Knotenpunkte 1, 2, 6, 7, 8 aufweisenden Teilring sowie zu einem zweiten, etwa die Knotenpunkte 3, 4, 5, 6, 7 aufweisenden Teilring verbindbar.

Die Wirkungsweise einer derartigen Anlage ist nun wie folgt:

Im normalen Betriebszustand der Schaltanlage werden die in den Stromzweigen 11 bis 18 des Ringes angeordneten Schaltstellen geschlossen und die in den sternförmig angeordneten Stromzweiten 31 bis 34 befindlichen Schaltstellen offen sein. Dadurch wird vermieden, daß bei einem Fehler auf einer Leitung jeweils drei Schalter betätigt werden.

Bei einem dauernden Fehler an einem Knotenpunkt können dann durch Schließen von zwei in den sternförmig angeordneten Stromzweigen vorgesehenen Schaltstellen, welche den Knotenpunkten zugeordnet sind, die dem nicht verfügbaren Knotenpunkt benachbart sind, zwei übergreifende Teilringe großer Redundanz gebildet werden. Ist beispielsweise der Knotenpunkt 1 nicht verfügbar, so werden die in den Stromzweigen 32 und 34 vorgesehenen Schaltstellen geschlossen und Teilringe mit den Knotenpunkten 2, 3, 4, 5 und 6 bzw. 4, 5, 6, 7 und 8 gebildet.

Eine derartige Schaltanlage benötigt bei einer geradzahligen Anzahl n von Knotenpunkten lediglich $n + n/halbe$ Leistungsschalter und $4 n$ Trennschalter. Bei einer ungeradzahligen Anzahl m von Knotenpunkten werden $m + (m+1)/halbe$ Leistungsschalter und $4 m + 1$ Trennschalter benötigt. Da jeder Knotenpunkt über mindestens drei parallel angeordnete Leistungsschalter mit dem restlichen Ring verbindbar ist, weist eine derartige Schaltanlage auch nach Erweiterung auf mehr als fünf Knotenpunkte eine hohe Redundanz auf. Ein weiterer Vorteil besteht darin, daß bei Ausfall eines Stromzweiges und zusätzlicher Nichtverfügbarkeit eines beliebigen Knotenpunktes übergreifende Teilringe gebildet werden können, die ihrerseits wiederum hohe Redundanz aufweisen. Entsprechendes gilt bei Nichtverfügbarkeit zweier beliebiger Knotenpunkte. Bei einer Knotenanzahl $n > 6$ läßt sich dann mindestens ein Teilring bilden, welcher eine hohe Versorgungssicherheit garantiert.

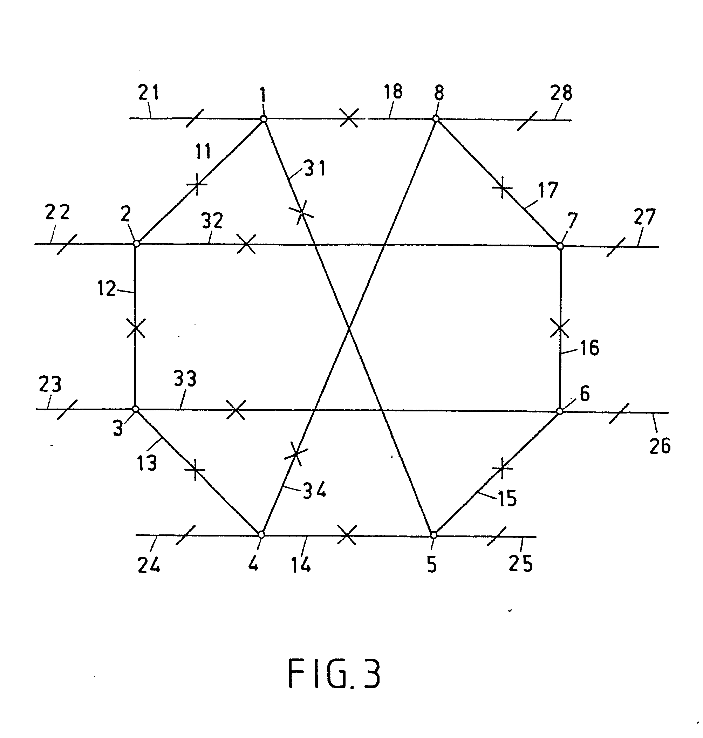

Bei der in Fig. 2 dargestellten Ausführungsform der erfindungsgemäßen Schaltanlage sind die Stromzweige 31 bis 34 jeweils zwischen Knotenpunkten 1 bis 8 angeordnet, welche auf Parallelen liegen, die beidseitig zu senkrecht aufeinander stehenden Mittelpunktsachsen des Ringes geführt sind. Diese Anlage unterscheidet sich von der Anlage gemäß Fig. 1 vor allem dadurch, daß ein erster, etwa die Knotenpunkte 1, 2, 7 und 8, sowie ein zweiter, etwa die Knotenpunkte 3, 4, 5 und 6, umfassender Teilring vorgesehen sind, welche keinen gemeinsamen Knotenpunkt aufweisen, und daß jeder Knotenpunkt des ersten Teilrings mit mindestens einem Knotenpunkt des zweiten Teilrings und umgekehrt jeder Knotenpunkt des zweiten Teilrings mit mindestens einem Knotenpunkt des ersten Teilrings über unterbrechbare Stromzweige, etwa 12, 16, 31, 34, verbindbar ist (Kreuzform).

Fig. 3 zeigt eine andere Ausführungsform der erfindungsgemäßen Schaltanlage.

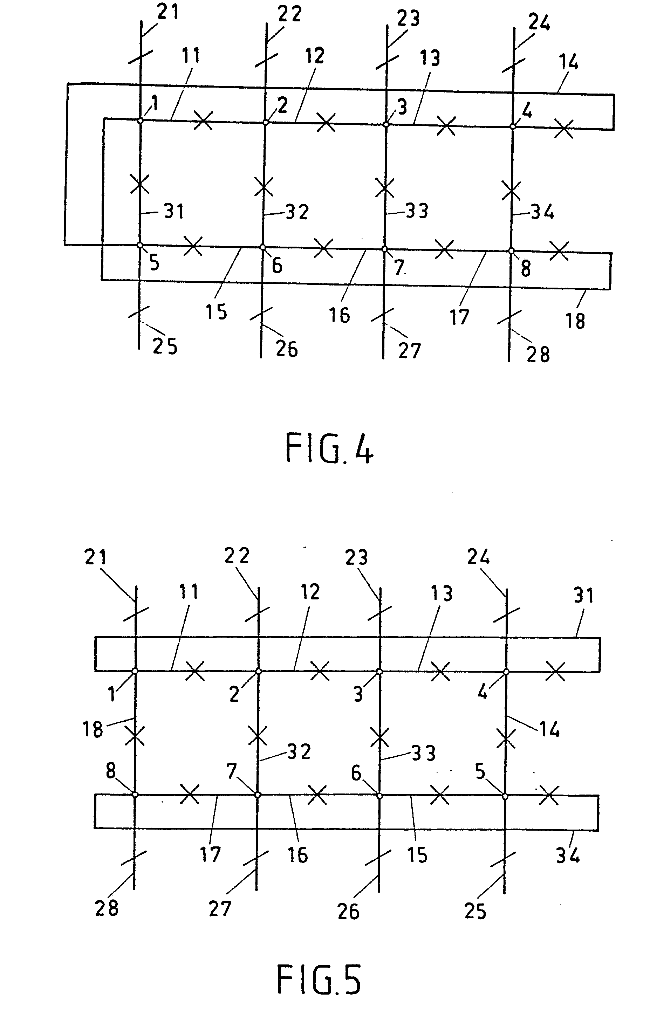

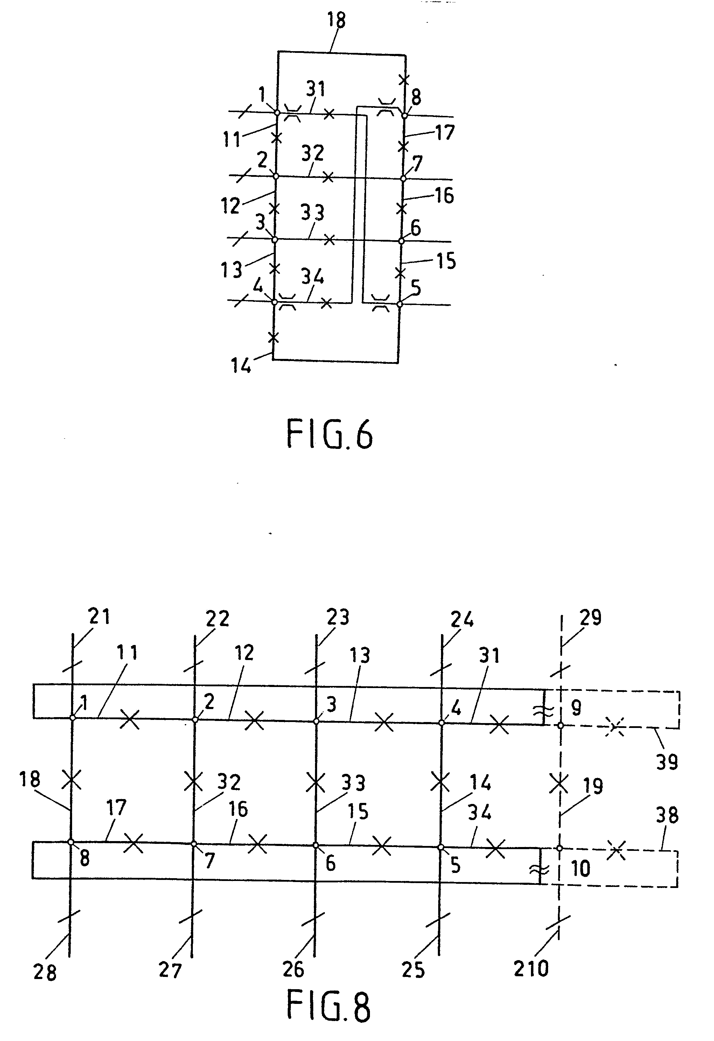

In den Figuren 4 bis 6 sind bevorzugte räumliche Anordnungen der Knotenpunkte und Stromzweige der erfindungsgemäßen Schaltanlage dargestellt. Hierbei sind die Knotenpunkte auf den längeren Seiten eines von den Stromzweigen 11 bis 18 begrenzten rechteckigen Feldes angeordnet. Derartige Anordnungen weisen den Vorteil auf, daß sie sich in einfacher Weise installieren lassen, da die Knotenpunkte beispielsweise auf Parallelen zueinander angeordnet und durch senkrecht dazu geführte Stromzweige verbunden werden können. Solche etwa in den Figuren 4 und 5 angegebenen Schaltanlagen sind besonders übersichtlich und lassen sich darüber hinaus wegen des kompakten Aufbaus in besonders kostengünstiger Weise realisieren und erweitern.

Die Anlagen gemäß den Figuren 4 bis 6 können mit konventionellen Hochspannungskomponenten, wie Freiluftschaltern, -wandlern und -trennschaltern, welche über Leiterseile oder -rohre miteinander verbunden sind, aufgebaut werden; sie können aber auch gekapselte, gasisolierte Schaltstellen und Verbindungsleitungen aufweisen, oder gänzlich als gasisolierte Schaltanlagen aufgebaut sein.

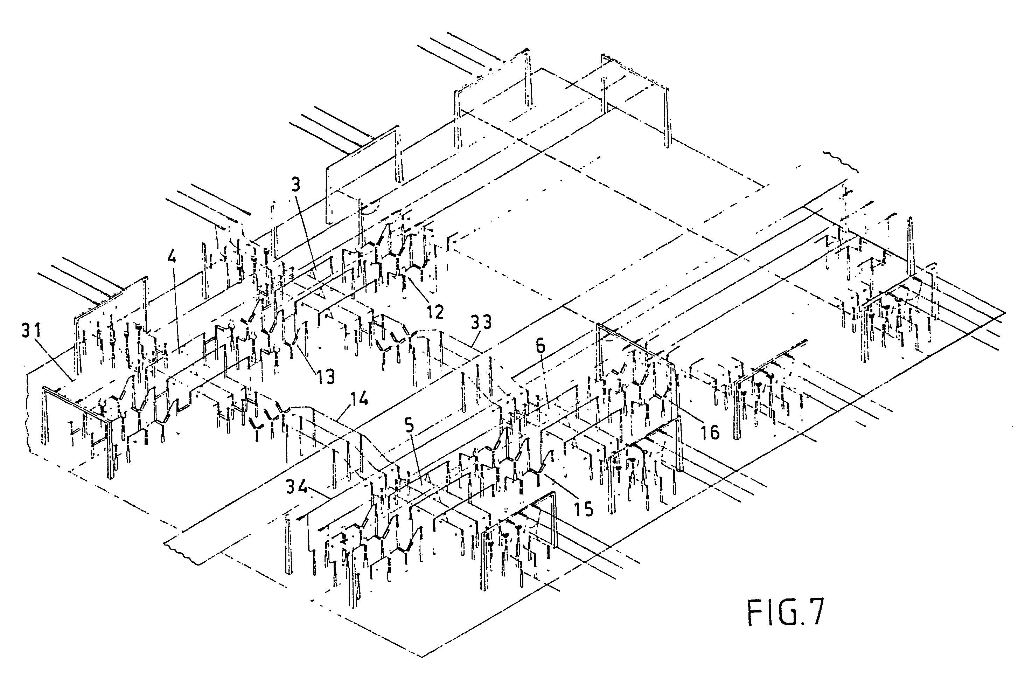

Fig. 7 zeigt eine perspektivische Darstellung einer Freiluftschaltanlage gemäß Fig. 2 bzw. 5 mit 8 Knotenpunkten. Diese Schaltanlage ist dreiphasig ausgeführt und weist dementsprechend für jede Phase die Knotenpunkte 1 bis 8 auf. Von den Stromzweigen sind nur 12, 13, 14, 15, 16 und 31, 33, 34 gezeichnet. Sämtliche Stromzweige weisen (nicht gekennzeichnete) erste Trenner, Leistungsschalter und zweite Trenner auf. Die Verbindung der einzelnen Komponenten erfolgt vorzugsweise durch Rohrschienen mit Ausnahme der Stromzweige 31 und 34, die als Seilüberspannungen ausgebildet sind. Um eine extrem niedrige Bauform der Schaltanlage zu ermöglichen, können die Stromzweige 31 und 34 als Kabelverbindungen oder als $SF_6$-Rohrgaskabel ausgeführt werden.

In Fig. 8 ist eine Schaltanlage gemäß Fig. 5 dargestellt, an deren Ende zusätzliche Knotenpunkte 9 und 10, d. h. zusätzliche Einspeisungen und Abgänge installiert werden sollen. Diese Knotenpunkte lassen sich in einfacher Weise in der Anlage gemäß Fig. 5 installieren. Dazu werden die Stromzweige 31 und 34 aufgetrennt und über die zu diesen Stromzeigen gehörenden Schaltstellen die Knotenpunkte 4 und 9 bzw. 5 und 10 verbunden. Sodann werden Stromzweige 39 und 38 zwischen den Knotenpunkten 1 und 9 bzw. 8 und 10 hergestellt und schließlich der Stromzweig 19 zwischen den Knotenpunkten 9 und 10 installiert.

Sämtliche erwähnten Stromzweige enthalten eine Serienschaltung eines ersten Trenners, eines Leistungsschalters, und eines zweiten Trenners.

**Patentansprüche**

1. Schaltanlage mit jeweils eine Leistungsschaltstelle enthaltenden Stromzweigen (z. B. 11) und mit mindestens vier in einem ersten und einem zweiten Teilring angeordneten Knotenpunkten (z. B. 1, 2, 7, 8; 3, 4, 5, 6), welche über die Stromzweige (z. B. 11) miteinander verbindbar sind, dadurch gekennzeichnet, daß die Knotenpunkte des ersten und des zweiten Teilringes keinen gemeinsamen Knotenpunkt besitzen, und daß jeder Knotenpunkt (z. B. 1) des ersten Teilrings mit einem Knotenpunkt (z. B. 4) des zweiten Teilrings und jeder Knotenpunkt (z. B. 5) des zweiten Teilrings mit einem Knotenpunkt (z. B. 8) des ersten Teilrings über einen der Stromzweige (z. B. 31, 34) verbindbar ist, welcher in keinem der Teilringe angeordnet ist (Fig. 2, 3, 5 bis 8).

2. Schaltanlage nach Anspruch 1, dadurch gekennzeichnet, daß die Anzahl der Knotenpunkte (z. B. 1, 2, 7, 8) des ersten Teilrings gleich der Anzahl der Knotenpunkte (z. B. 3, 4, 5, 6) des zweiten Teilrings ist, und daß die Anzahl der Stromzweige (z. B. 12, 16, 31, 34) zwischen erstem und zweitem Teilring gleich der Anzahl der in jedem der beiden Teilringe vorgesehenen Knotenpunkte ist.

3. Schaltanlage mit Knotenpunkten (1, 2, ..., 8), welche über unterbrechbare und jeweils eine Leistungsschaltstelle aufweisende erste Stromzweige (11, 12, ..., 18) in Form eines Ringes geschaltet miteinander verbindbar sind, bei der mindestens einer der Knotenpunkte (z. B. 1) mit mindestens einem der anderen Knotenpunkte (z. B. 5) über einen unterbrechbaren und eine Leistungsschaltstelle aufweisenden zweiten Stromzweig (z. B. 31) verbindbar ist und bei der zwischen zwei durch den unterbrechbaren zweiten Stromzweig (z. B. 31) verbundenen Knotenpunkten (z. B. 1, 5) im Ring mindestens ein dritter Knotenpunkt (z. B. 2, 3, 4) angeordnet ist, dadurch gekennzeichnet, daß jeder von mindestens fünf im Ring vorgesehenen Knotenpunkten (z. B. 1) über jeweils einen unterbrechbaren zweiten Stromzweig (z. B. 31) mit einem der Knotenpunkte (z. B. 5) des Ringes und höchstens einer der Knotenpunkte über zwei unterbrechbare zweite Stromzweige mit zwei der Knotenpunkte des Ringes verbindbar ist (Fig. 1, 4).

4. Schaltanlage nach Anspruch 3, dadurch gekennzeichnet, daß bei einer geraden Anzahl von gleichmäßig über den Umfang des Ringes verteilten Knotenpunkten (1, 2, ..., 8) die zweiten Stromzweige (31, ..., 34) jeweils zwischen Knotenpunkten (1, 5; 2, 6; 3, 7; 4, 8) angeordnet sind, welche sich hinsichtlich des Mittelpunktes des Ringes gegenüberliegen (Sternform gemäß Fig. 1).

5. Schaltanlage nach einem der Ansprüche 1 bis 4, dadurch gekennzeichnet, daß die Knotenpunkte (1, 2, ..., 8) auf den längeren Seiten eines von einem Teil der Stromzweige (11, 12, ..., 18) begrenzten rechteckigen Feldes angeordnet sind, und daß jeweils zwei einander mit kürzestem Abstand gegenüberstehende Knotenpunkte (z. B. 3, 7) miteinander verbindbar sind (Fig. 4 bis 8).

**Claims**

1. Switching system comprising current branches (for example 11), which in each case contain one power switching point, and at least four nodes (for example 1, 2, 7, 8; 3, 4, 5, 6) which are arranged in a first and a second part ring and which can be connected to each other via the current branches (for example 11), characterised in that the nodes of the first and of the second part ring do not have a common node and that each node (for example 1) of the first part ring can be connected to a node (for example 4) of the second part ring and each node (for example 5) of the second part ring can be connected to a node (for example 8) of the first part ring via one of the current branches (for example 31, 34) which is not arranged in any of the part rings (Figure 2, 3, 5 to 8).

2. Switching system according to Claim 1, characterised in that the number of nodes (for example 1, 2, 7, 8) of the first part ring is equal to the number of nodes (for example 3, 4, 5, 6) of the second part ring and that the number of current branches (for example 12, 16, 31, 34) between the first and the second part ring is equal to the number of the nodes provided in each of the two part rings.

3. Switching system comprising nodes (1, 2, ..., 8) which can be connected to each other, switched in the form of a ring, via interruptable first current branches (11, 12, ..., 18) which in each case contain one power switching point, in which switching system at least one of the nodes (for example 1) can be connected to at least of the nodes (for example 1) can be connected to at least one of the other nodes (for example 5) via an interruptable second current branch (for example 31) which contains one power switching point and in which a third node (for example 2, 3, 4) is arranged in the ring between two nodes (for example 1, 5) which are connected by the interruptable second current branch (for example 31), characterised in that each of at least 5 nodes (for example 1) provided in the ring can be connected via in each case one interruptable second current branch (for example 31) to one of the nodes (for example 5) of the ring and at the most one of the nodes can be connected to two of the nodes of the ring via two interruptable second current branches (Figure 1, 4).

4. Switching system according to claim 3, characterised in that, with an even number of nodes (1, 2, . . ., 8) which are uniformly distributed over the circumference of the ring, the second current branches (31, . . ., 34) are in each case arranged between nodes (1, 5; 2, 6; 3, 7; 4, 8) which are opposite to each other with respect to the centre of the ring (star shape according to Figure 1).

5. Switching system according to one of claims 1 to 4, characterised in that the nodes (1, 2, . . ., 8) are arranged on the longer sides of a rectangular field which is limited by one part of the current branches (11, 12, . . ., 18) and that in each case two nodes can be connected to each other which are opposite to each other with the shortest distance (for example 3, 7) (Figure 4 to 8).

## Revendications

1. Installation de commutation comportant des dérivations (par exemple 11) contenant chaque fois un endroit de commutation de puissance et au moins quatre points nodaux disposés en une première boucle partielle et une seconde boucle partielle (par exemple 1, 2, 7, 8; 3, 4, 5, 6), ces points nodaux pouvant être interconnectés par l'intermédiaire des dérivations (par exemple 11), caractérisé en ce que les points nodaux de la première et de la seconde boucle partielle ne comprennent pas de point nodal commun et chaque point nodal (par exemple 1) de la première boucle partielle peut être connecté à un point nodal (par exemple 4) de la seconde boucle partielle et chaque point nodal (par exemple 5) de la seconde boucle partielle peut être connecté à un point nodal (par exemple 8) de la première boucle partielle par l'intermédiaire d'une des dérivations (par exemple 31, 34) qui n'est disposée dans aucune des boucles partielles (Fig. 2, 3, 5 à 8).

2. Installation de commutation suivant la revendication 1, caractérisée en ce que le nombre de points nodaux (par exemple 1, 2, 7, 8) de la première boucle partielle est égal au nombre des points nodaux (par exemple 3, 4, 5, 6) de la seconde boucle partielle et le nombre de dérivations (par exemple 12, 16, 31, 34) entre la première et la seconde boucle partielle est égal au nombre des points nodaux prévus dans chacune des deux boucles partielles.

3. Installation de commutation comportant des points nodaux (1, 2, . . ., 8) qui peuvent être interconnectés par l'intermédiaire de premières dérivations (11, 12, . . ., 18) pouvant être interrompues et présentant chaque fois un endroit de commutation de puissance sous la forme d'une boucle, dans laquelle au moins un des points nodaux (par exemple 1) peut être connecté à au moins un des autres points nodaux (par exemple 5) par l'intermédiaire d'une seconde dérivation (par exemple 31) pouvant être interrompue et présentant un endroit de commutation de puissance, et dans laquelle, entre deux points nodaux (par exemple 1, 5) de la boucle reliés par la seconde dérivation (par exemple 31) pouvant être interrompue, est disposé au moins un troisième point nodal (par exemple 2, 3, 4), caractérisée en ce que chacun d'au moins cinq points nodaux (par exemple 1) prévus dans la boucle peut être connecté par l'intermédiaire chaque fois d'une deuxième dérivation pouvant être interrompue (par exemple 31) à un des points nodaux (par exemple 5) de la boucle et, tout au plus, un des points nodaux peut être connecté par l'intermédiaire de deux secondes dérivations pouvant être interrompues à deux des points nodaux de la boucle (Fig. 1, 4).

4. Installation de commutation suivant la revendication 3, caractérisé en ce que dans le cas d'un nombre pair de points nodaux (1, 2, . . ., 8) répartis de manière uniforme sur le pourtour de la boucle, les secondes dérivations (31, . . ., 34) sont chacune disposée entre des points nodaux (1, 5; 2, 6; 3, 7; 4, 8) qui sont opposés par rapport au centre de la boucle (forme en étoile représentée sur la Fig. 1).

5. Installation de commutation suivant l'une quelconque des revendications 1 à 4, caractérisée en ce que les points nodaux (1, 2, . . ., 8) sont disposés sur les longs côtés d'une zone rectangulaire délimitée par une partie des dérivations (11, 13, . . ., 18) et deux points nodaux opposés l'un à l'autre par la plus courte distance (par exemple 3, 7) peuvent chaque fois être connectés l'un à l'autre (Fig. 4 à 8).

FIG.1

FIG.2

FIG.3

FIG.4

FIG.5

FIG.6

FIG.8

FIG.7